# EUROPEAN PATENT SPECIFICATION

(11) **EP 4 360 355 B1**
(45) Date of publication and mention of the grant of the patent: **29.04.2026**
(21) Application number: 21946291.8
(22) Date of filing: 21.06.2021
(51) Int. Cl.: H04W 24/10, H04W 36/08, H04W 28/02

(54) **A ROBUST RADIO LINK MONITORING METHOD**
ROBUSTES FUNKVERBINDUNGSÜBERWACHUNGSVERFAHREN
PROCÉDÉ DE SURVEILLANCE DE LIAISON RADIO ROBUSTE

(43) Date of publication of application: 01.05.2024
(73) Proprietor: QUALCOMM Incorporated, San Diego, CA 92121-1714 (US)
(72) Inventor: CAO, Yiqing, San Diego, California 92121-1714 (US); GAAL, Peter, San Diego, California 92121-1714 (US); MA, Liangping, San Diego, California 92121-1714 (US); WANG, Xiao Feng, San Diego, California 92121-1714 (US); RICO ALVARINO, Alberto, San Diego, California 92121-1714 (US); HAN, Bin, San Diego, California 92121-1714 (US); WANG, Ting, San Diego, California 92121-1714 (US); LI, Yan, San Diego, California 92121-1714 (US); DU, Zhimin, San Diego, California 92121-1714 (US)
(74) Representative: Tomkins & Co
(86) International application number: PCT/CN2021/101168
(87) International publication number: WO 2022/266788

(56) References cited:
- CN-A- 109 644 361
- CN-A- 111 066 344
- US-A1- 2020 374 960
- US-A1- 2021 006 998
- US-A1- 2021 014 717
- US-A1- 2021 051 499
- US-A1- 2021 112 431

## Description

### BACKGROUND

### Technical Field

The present disclosure generally relates to communication systems, and more particularly, to a wireless communication system between a user equipment (UE) and a base station.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

US 2021/051499 discloses a method for radio link monitoring (RLM) performed by a user equipment (UE). The method includes: receiving, from a serving cell, an RLM configuration, monitoring an RLM reference signal (RS) (RLM-RS) resource indicated by the RLM configuration to determine a first downlink (DL) radio link quality; monitoring a backup RLM-RS resource that is associated with the RLM-RS resource to determine a second DL radio link quality after determining that the first DL radio link quality is lower than a threshold and the RLM configuration also indicates the backup RLM-RS resource; and sending, via a physical (PHY) layer of the UE, an RLM indication to a higher layer of the UE based on at least one of the first DL radio link quality and the second DL radio link quality.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided. The apparatus may be a UE. The UE obtains a reference signal from a base station. The UE determines multiple groups of consecutive out-of-sync indications in response to the reference signal. The UE triggers a radio link monitoring (RLM) timer in response to determining the multiple groups of consecutive out-of-sync indications.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 is a diagram illustrating an example of an SSB block error rate (BLER) which the UE may assess over time during RLM.
FIG. 5 is a diagram illustrating an example of consecutive out-of-sync indications and in-sync indications which the UE may determine during RLM and for detecting radio link failure (RLF).
FIG. 6 is a diagram illustrating an example of multiple groups of consecutive out-of-sync indications which the UE may determine for a same cell or carrier when performing RLM.
FIG. 7 is a diagram illustrating an example of multiple groups of consecutive out-of-sync indications which the UE may determine for different cells or carriers when performing RLM.
FIG. 8 is a diagram illustrating an example of a call flow between a UE and a base station.
FIG. 9 is a flowchart of a method of wireless communication.
FIG. 10 is a diagram illustrating an example of a hardware implementation for an example apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

High altitude platform station (HAPS) systems enable broadband connectivity and telecommunication services in underserved rural or remote areas by providing base stations on drones, aircraft, or other locations at tropospheric altitudes (generally 10 km - 20 km from the ground depending on latitude). Typically, base stations in the troposphere may be subject to platform vibrations or turbulence notwithstanding physical balancing mechanisms (e.g., 200 kg balancing weights), which in turn may cause beam shaking. Such shaking may result in rapid signal quality deterioration, which although quickly recoverable, may still lead to short term RLF for UEs located at a cell edge. While potentially moving the base station from the troposphere to the stratosphere may minimize turbulence, maintaining the base station at such heights may be difficult due to weather, wind, humidity, and other environmental factors. Accordingly, it would be helpful to improve RLM for HAPS systems due to tropospheric turbulence conditions.

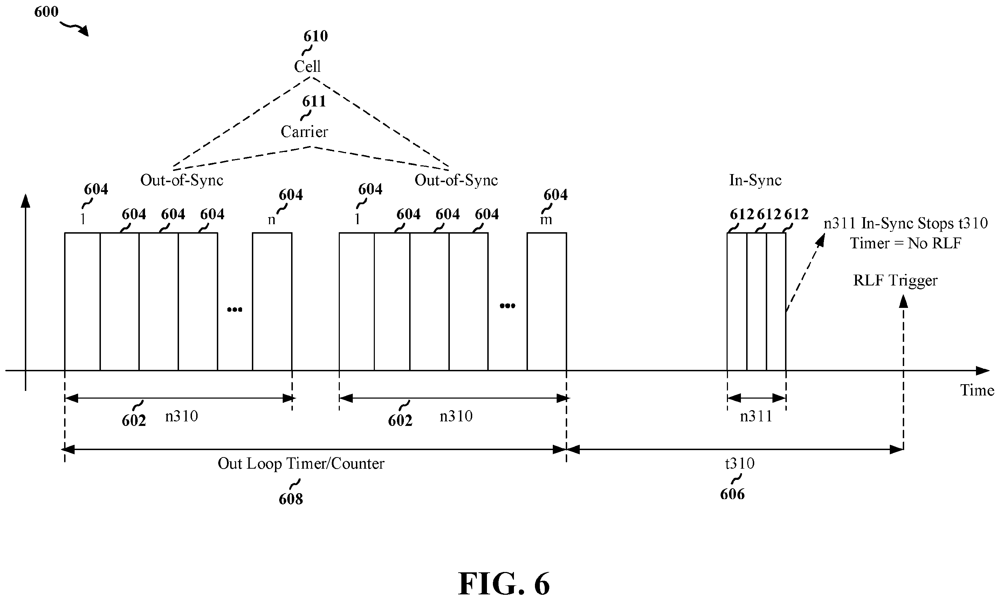

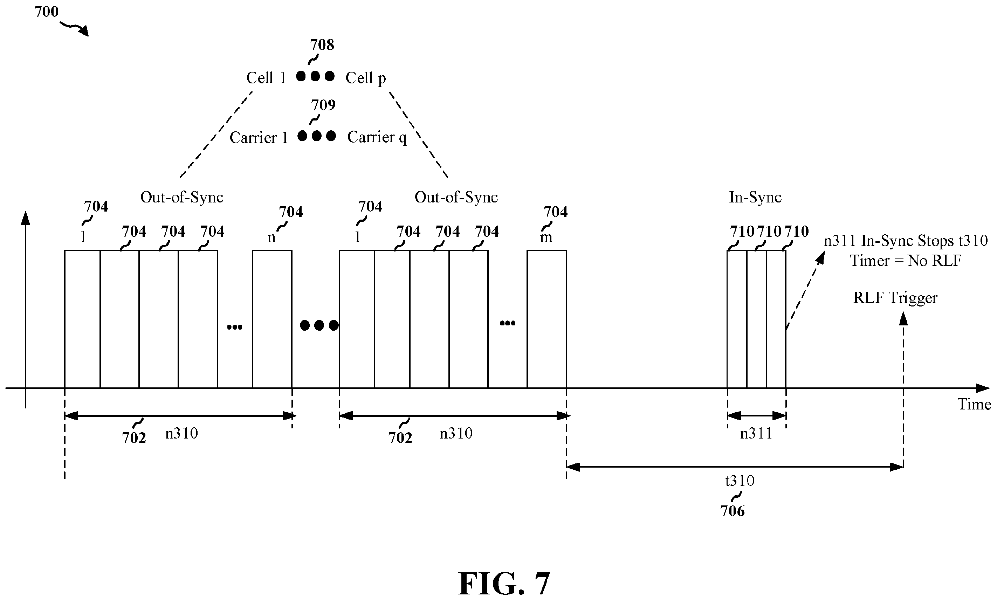

Aspects of the present disclosure improve RLM for HAPS systems by providing a longer monitoring window for out-of-sync determinations (effectively, a longer out-of-sync evaluation period or multiple out-of-sync evaluation periods) before the UE triggers an RLM timer (t310) for in-sync determinations. In one example, a UE configured to communicate with a base station in one cell (e.g., a SpCell) or carrier (e.g., a primary component carrier (PCC)) may perform dual circle monitoring in order to extend the time to trigger the RLM timer. More details with respect to this example are described below with respect to FIG. 6. In another example, a UE configured to communicate with a base station in multiple cells (e.g., a SpCell and a SCell) or multiple carriers (e.g., a PCC and a secondary component carrier (SCC)) may perform dual cell or carrier monitoring and triggers the RLM timer when both cells or carriers meet out-of-sync conditions. More details with respect to this example are described below with respect to FIG. 7. Thus, in either example, the UE may perform additional out-of-sync monitoring during RLM before proceeding with in-sync monitoring. The longer monitoring may allow the UE to account for rapid BLER changes (ping-pong effects) caused by tropospheric turbulence, allowing for more accurate RLM determinations and minimal RLF detections.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

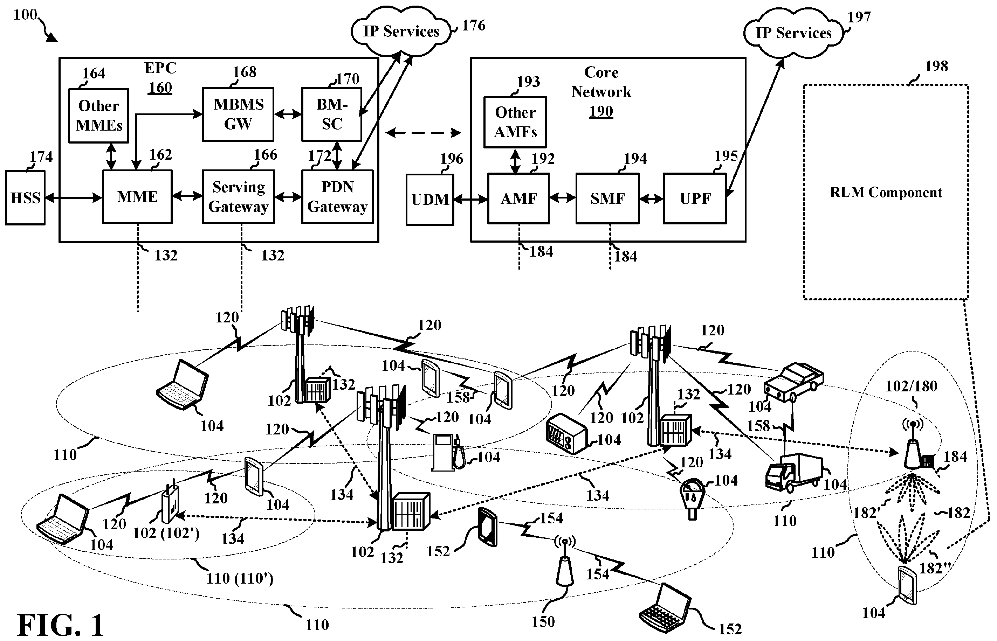

FIG. 1 is a diagram illustrating an example of a wireless communications system and an access network 100. The wireless communications system (also referred to as a wireless wide area network (WWAN)) includes base stations 102, user equipment(s) (UE) 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G Long Term Evolution (LTE) (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G New Radio (NR) (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, Multimedia Broadcast Multicast Service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* megahertz (MHz) (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 gigahertz (GHz) unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, an MBMS Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides Quality of Service (QoS) flow and session management. All user IP packets are transferred through the UPF 195. The UPF 195 provides UE IP address allocation as well as other functions. The UPF 195 is connected to the IP Services 197. The IP Services 197 may include the Internet, an intranet, an IMS, a Packet Switch (PS) Streaming Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the present disclosure may focus on 5G NR, the concepts and various aspects described herein may be applicable to other similar areas, such as LTE, LTE-Advanced (LTE-A), Code Division Multiple Access (CDMA), Global System for Mobile communications (GSM), or other wireless/radio access technologies.

Referring again to FIG. 1, in certain aspects, the UE 104 may include a RLM component 198 that is configured to obtain a reference signal from a base station, determine multiple groups of consecutive out-of-sync indications in response to the reference signal, and trigger a RLM timer in response to determining the multiple groups of consecutive out-of-sync indications.

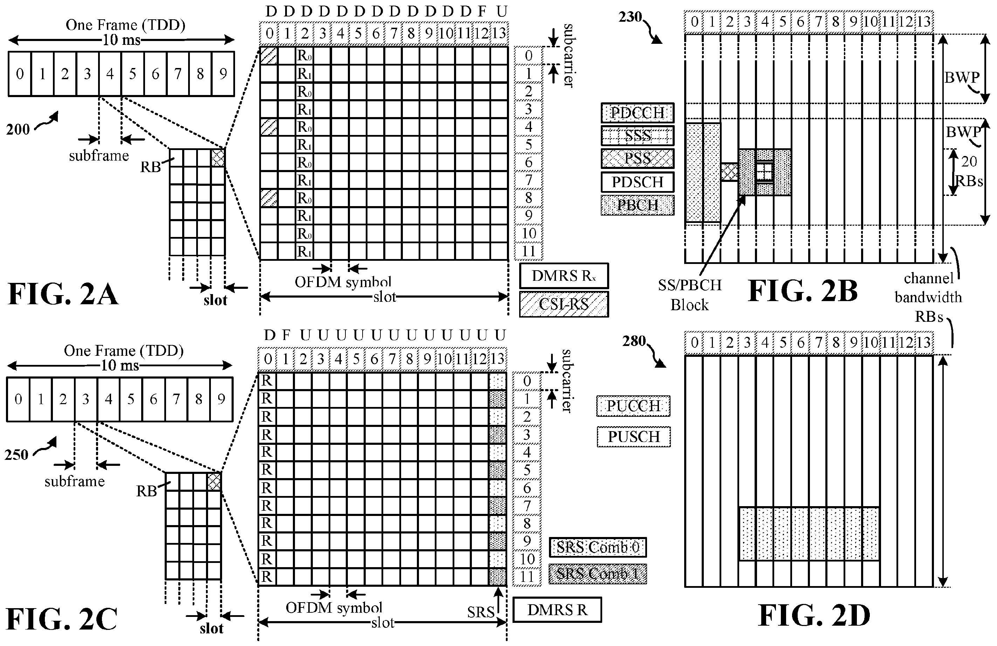

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

Other wireless communication technologies may have a different frame structure and/or different channels. A frame, e.g., of 10 milliseconds (ms), may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) orthogonal frequency-division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* * 15 kilohertz (kHz), where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of slot configuration 0 with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as Rₓ for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A PDCCH within one BWP may be referred to as a control resource set (CORESET). Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgement (ACK) / non-acknowledgement (NACK) feedback. The PUSCH carries data, and may additionally be used to carry a buffer status report (BSR), a power headroom report (PHR), and/or UCI.

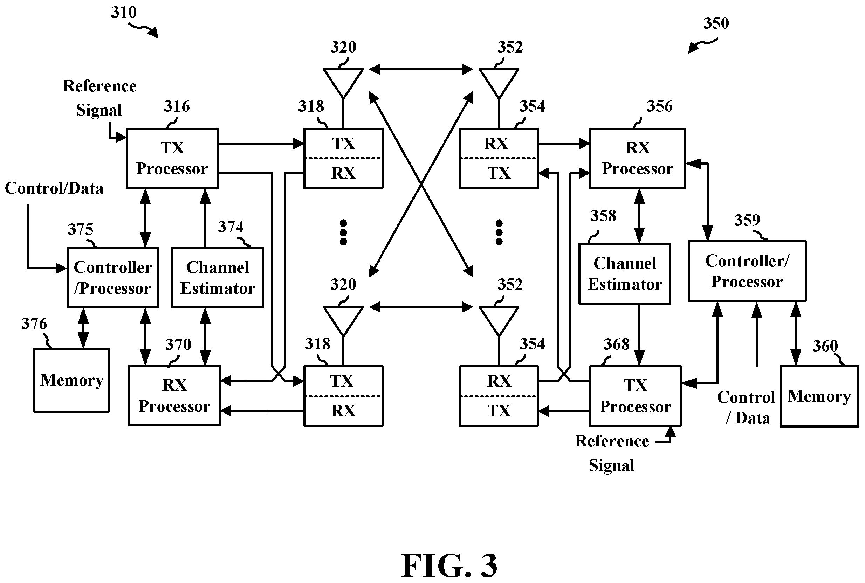

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with RLM component 198 of FIG. 1.

HAPS systems enable broadband connectivity and telecommunication services in underserved rural or remote areas by providing base stations on drones, aircraft, or other locations at tropospheric altitudes (generally 10 km - 20 km from the ground depending on latitude). Typically, base stations in the troposphere may be subject to platform vibrations or turbulence notwithstanding physical balancing mechanisms (e.g., 200 kg balancing weights), which in turn may cause beam shaking. Such shaking may result in rapid signal quality deterioration, which although quickly recoverable, may still lead to short term RLF for UEs located at a cell edge. While potentially moving the base station from the troposphere to the stratosphere may minimize turbulence, maintaining the base station at such heights may be difficult due to weather, wind, humidity, and other environmental factors. Accordingly, it would be helpful to improve RLM for HAPS systems due to tropospheric turbulence conditions.

Generally, during RLM, a UE may monitor downlink radio link quality of a special cell (SpCell), e.g., a primary cell (PCell) or a primary secondary cell (PSCell), based on a reference signal (RS) configured as RLM-RS resource(s). For example, the configured RLM-RS resources may be synchronization signal blocks (SSBs), channel state information reference signals (CSI-RSs), or a mix of SSBs and CSI-RSs. On each RLM-RS resource in a cell, the UE may estimate the downlink radio link quality and compare it to an out-of-sync threshold Qout and an in-sync threshold Qin. The threshold Qout is the level at which the downlink radio link may not be reliably received and may correspond to an out-of-sync block error rate (BLERout). Similarly, the threshold Qin is the level at which the downlink radio link quality may be received with significantly higher reliability than at Qout and may correspond to an in-sync block error rate (BLERin). The UE may derive Qout and Qin each based on hypothetical PDCCH transmission parameters (e.g., DCI format 1-0, two OFDM control symbols, a bandwidth of 24 PRBs, etc.). Moreover, the UE may determine BLERout and BLERin from a network configuration via parameter *rlmInSyncOutOfSyncThreshold* (or some other parameter), or when not configured with such parameter, the UE may determine BLERout and BLERin from default pre-configured values. For example, BLERout may be pre-configured as 10%, and BLERin may be pre-configured as 2%.

When the configured RLM-RS resources include SSBs, the UE may evaluate during RLM whether the downlink radio link quality of the SSBs estimated over a last T_{Evaluate_out_SSB} evaluation period becomes worse than the threshold Qout within that period. Similarly, the UE may evaluate during RLM whether the downlink radio link quality of the SSBs estimated over a last T_{Evaluate_in_SSB} evaluation period becomes better than the threshold Qin within that period. The duration of T_{Evaluate_out_SSB} and T_{Evaluate_in_SSB} may depend on frequency range (e.g., FR1 or FR2) and a discontinuous-reception (DRX) mode of the UE. For instance, if the UE is not in DRX mode and the frequency range is FR1, T_{Evaluate_out_SSB} may be a maximum value (in ms) between 200 and 10*T_{SSB}, and T_{Evaluate_in_SSB} may be a maximum value (in ms) between 100 and 10*T_{SSB}, where T_{SSB} is the periodicity of the SSB configured for RLM. Such timing may account for possible ping-pong effects in SSB BLER (e.g., if BLER switches back and forth between exceeding and not exceeding the Qout or Qin thresholds) and thus prevent incorrect out-of-sync or in-sync determinations. On the other hand, if the UE is in a DRX mode or the frequency range is FR2, then T_{Evaluate_out_SSB} and T_{Evaluate_in_SSB} may each be different.

Similarly, when the configured RLM-RS resources include CSI-RS, the UE may evaluate during RLM whether the downlink radio link quality of the CSI-RS estimated over a last T_{Evaluate_out_CSI-RS} evaluation period becomes worse than the threshold Qout within that period. Similarly, the UE may evaluate during RLM whether the downlink radio link quality of the CSI-RS estimated over a last T_{Evaluate_in_CSI-RS} evaluation period becomes better than the threshold Qin within that period. The duration of T_{Evaluate_out_CSI-RS} and T_{Evaluate_in_CSI-RS} may depend on frequency range (e.g., FR1 or FR2) and a DRX mode of the UE. For instance, if the UE is not in DRX mode and the frequency range is FR1, T_{Evaluate_out_CSI-RS} may be a maximum value (in ms) between 200 and 20*T_{CSI-RS}, and T_{Evaluate_in_SSB} may be a maximum value (in ms) between 100 and 10*T_{CSI-RS}, where T_{CSI-RS} is the periodicity of the CSI-RS configured for RLM. Such timing may account for possible ping-pong effects in CSI-RS BLER (e.g., if BLER switches back and forth between exceeding and not exceeding the Qout or Qin thresholds) and thus prevent incorrect out-of-sync or in-sync determinations. On the other hand, if the UE is in a DRX mode or the frequency range is FR2, then T_{Evaluate_out_CSI-RS} and T_{Evaluate_in_CSI-RS} may each be different.

When the UE determines the downlink radio link quality on all the configured RLM-RS resources to be worse than Qout, a physical layer (L1) of the UE may send an out-of-sync indication for the cell to higher layers (L2/L3) of the UE. For instance, if the UE detects that all SSBs or CSI-RS received in a cell within a corresponding evaluation period T_{Evaluate_out_SSB} or T_{Evaluate_out_CSI-RS} have a BLER above 10% (Qout), the UE may receive an out-of-sync indication for the cell. Similarly, when the UE determines the downlink radio link quality on at least one of the configured RLM-RS resources to be better than Qin, the physical layer of the UE may send an in-sync indication for the cell to the higher layers of the UE. For instance, if the UE detects that at least one SSB or CSI-RS received in a cell within a corresponding evaluation period T_{Evaluate_in_SSB} or T_{Evaluate_in_CSI-RS} have a BLER below 2% (Qin), the UE may receive an in-sync indication for that cell. Each successive out-of-sync or in-sync indication received within a corresponding evaluation period may be separated by at least T_{Indication_interval}, which value may also depend on whether the UE is in a DRX mode. For example, when the UE is not in a DRX mode, T_{Indication_interval} may be a maximum value (in ms) between 10 and a shortest periodicity of all configured RLM-RS resources for the monitored cell (e.g., T_{SSB} or T_{CSI-RS}).

The UE may also be configured with counters and timers for RLM, including a counter n310 which counts up to a maximum number of consecutive out-of-sync indications for an SpCell received from lower layers, a counter n311 which counts up to a maximum number of consecutive in-sync indications for the SpCell received from lower layers, and a timer t310 which is triggered to start upon receiving the n310 (maximum) consecutive out-of-sync indications from the lower layers and which is triggered to stop upon receiving the n311 (maximum) consecutive in-sync indications from the lower layers. During RLM, if the UE receives n310 consecutive out-of-sync indications for the SpCell from lower layers, the UE may detect physical layer problems and accordingly start timer t310 for the corresponding SpCell. If the UE afterwards receives n311 consecutive in-sync indications for the SpCell from the lower layers while t310 is running, the UE may detect recovery of the physical layer problems and accordingly stop timer t310 for the corresponding SpCell. Otherwise, if the UE does not receive n311 consecutive in-sync indications while t310 is running and t310 expires, the UE may detect RLF to occur in the cell.

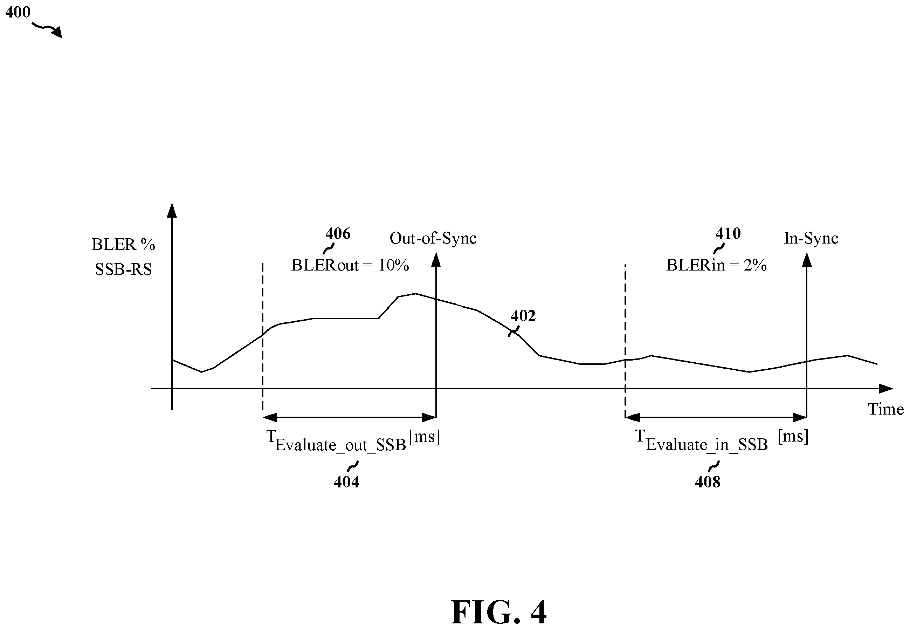

FIG. 4 illustrates an example 400 of a graph depicting a change in BLER 402 for SSBs which the UE may assess over time during RLM of a SpCell (e.g., a PCell or PSCell). While FIG. 4 specifically depicts the example where the UE performs RLM based on SSBs, the UE may similarly perform RLM based on CSI-RSs in another example. During an out-of-sync evaluation period 404 (e.g., T_{Evaluate_out_SSB}), the UE may determine whether one or more out-of-sync indications have occurred in response to the reference signal (e.g., the SSBs). For instance, during each indication period within the out-of-sync evaluation period, the UE may measure BLER 402 (e.g., based on a reference signal receive power (RSRP) or signal to interference plus noise ratio (SINR) of the reference signal), and the UE may compare the measured BLER with a BLERout or Qout threshold 406 (e.g., 10%). If the measured BLER is above the Qout threshold, the UE may receive an out-of-sync indication from lower layers. The UE may similarly determine multiple, consecutive out-of-sync indications (one in each successive indication period) to have occurred during the out-of-sync evaluation period. Afterwards, during an in-sync evaluation period 408 (e.g., T_{Evaluate_in_SSB}), the UE may determine whether one or more in-sync indications have occurred in response to the reference signal (e.g., the SSBs). For instance, during each indication period within the in-sync evaluation period, the UE may measure BLER 402 (e.g., based on RSRP or SINR of the reference signal), and the UE may compare the measured BLER with a BLERin or Qin threshold 410 (e.g., 2%). If the measured BLER is below the Qin threshold, the UE may receive an in-sync indication from lower layers. The UE may similarly determine multiple, consecutive in-sync indications (one in each successive indication period) to have occurred during the in-sync evaluation period.

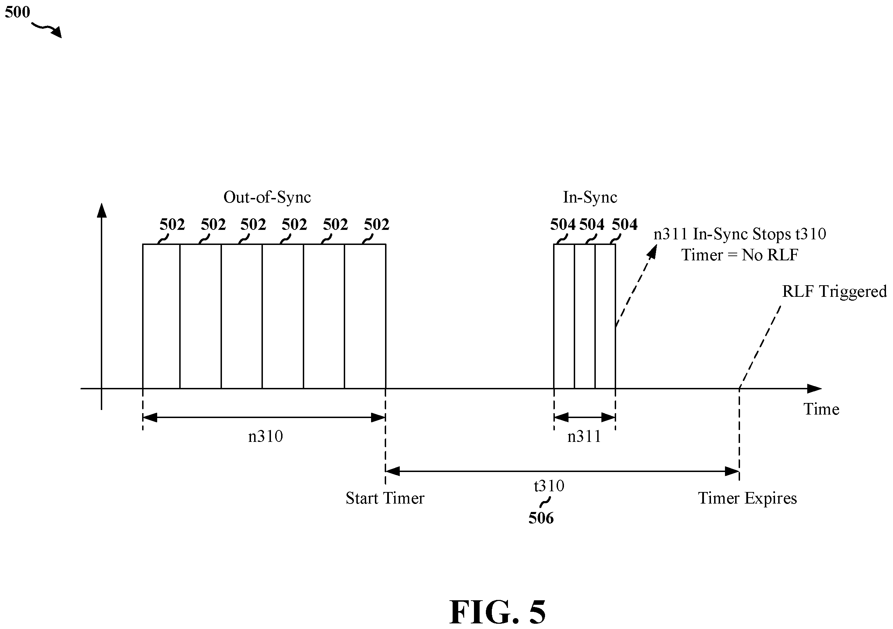

FIG. 5 illustrates an example 500 of a graph depicting consecutive out-of-sync indications 502 and in-sync indications 504 which the UE may determine during RLM. In this example, the network has configured the value of n310 as 6 and the value of n311 as 3, although the configured values of n310 and n311 can be different in other examples. Accordingly, if the UE has received six (n310), consecutive out-of-sync indications 502 within the out-of-sync evaluation period such as described above with respect to FIG. 4, the UE may start RLM timer 506 (timer t310) and proceed to receive in-sync indications 504 while the RLM timer is counting. If the UE subsequently receives three (n311), consecutive in-sync indications 504 within the in-sync evaluation period such as also described above with respect to FIG. 4, the UE may stop RLM timer 506, and no RLF may be detected. On the other hand, the UE may detect that RLF has occurred if the UE does not receive the three (n311) consecutive in-sync indications before the RLM timer expires.

Thus, generally during RLM, a UE determines a single group of consecutive, out-of-sync indications for a single cell (or carrier) in response to reference signals from a base station, and the UE starts the RLM timer in response to that single group of consecutive out-of-sync indications. For instance, referring to FIGs. 4 and 5, the UE may determine that a group of n310 (e.g. 6), consecutive out-of-sync indications 502 for a PCell or for a PCC have occurred within out-of-sync evaluation period 404 in response to BLER measurements exceeding the Qout threshold 406, and the UE may start RLM timer 506 (t310) upon determining the group of n310, consecutive out-of-sync indications to have occurred. However, such RLM timing may be insufficient in cases where the base station is a HAPS. For instance, the maximum durations of the out-of-sync evaluation period and in-sync evaluation period in RLM may not sufficiently account for any ping-pong effects in BLER that may be caused by platform vibrations in HAPS systems (e.g., where the BLER may switch back and forth between exceeding and not exceeding the Qout or Qin thresholds due to turbulence at higher altitudes). Therefore, it would be desirable to improve RLM for HAPS systems (e.g., in the troposphere).

Aspects of the present disclosure improve RLM for HAPS systems by providing a longer monitoring window for out-of-sync determinations (effectively, a longer out-of-sync evaluation period or multiple out-of-sync evaluation periods) before the UE triggers an RLM timer (t310) for in-sync determinations. In one example, a UE configured to communicate with a base station in one cell (e.g., a SpCell) or carrier (e.g., a PCC) may perform dual circle monitoring in order to extend the time to trigger the RLM timer. More details with respect to this example are described below with respect to FIG. 6. In another example, a UE configured to communicate with a base station in multiple cells (e.g., a SpCell and a SCell) or multiple carriers (e.g., a PCC and a SCC) may perform dual cell or carrier monitoring and triggers the RLM timer when both cells or carriers meet out-of-sync conditions. More details with respect to this example are described below with respect to FIG. 7. Thus, in either example, the UE may perform additional out-of-sync monitoring during RLM before proceeding with in-sync monitoring. The longer monitoring may allow the UE to account for rapid BLER changes (ping-pong effects) caused by tropospheric turbulence, allowing for more accurate RLM determinations and minimal RLF detections.

FIG. 6 illustrates an example 600 of a graph depicting multiple groups 602 of consecutive out-of-sync indications 604 which the UE may determine for a same cell or carrier during RLM. In this example, the UE may perform dual circle monitoring by looping (e.g. circling) more than once (e.g., twice in this example) through n310 consecutive out-of-sync determinations, and the UE may start RLM timer 606 in response to the multiple determinations. The number of loops may be represented by a timer or counter configured by the network (e.g., an out loop timer 608 or counter) which may count either in units of time or in number of groups 602. Thus, the maximum value of out loop timer 608 may indicate the number of groups 602 of consecutive out-of-sync indications 604 which the UE determines before the UE may ultimately trigger the RLM timer 606. For example, if the out loop timer 608 is configured or pre-configured with a value of 2 (e.g., two groups 602 of n310 consecutive out-of-sync indications 604 such as illustrated in FIG. 6), the UE may initially determine one group of consecutive out-of-sync indications as described above with respect to FIGs. 4 and 5, loop back to determine another group of consecutive out-of-sync indications in a similar manner, and then start the RLM timer 606 in response to determining the two groups. In other examples, out loop timer 608 may be configured or pre-configured with a value of more than 2, and the UE may determine more than two groups of consecutive out-of-sync indications accordingly. Each group of consecutive out-of-sync indications may be determined within a same out-of-sync evaluation period (e.g., where the last indication of one group and the initial indication of another group may be determined in non-successive or inconsecutive indication periods within the same out-of-sync evaluation period T_{Evaluate_out_SSB} or T_{Evaluate_out_CSI-RS}). Alternatively, each group of consecutive out-of-sync indications may be determined within a different out-of-sync evaluation period (e.g., T_{Evaluate_out_SSB1} and subsequently T_{Evaluate_out_SSB2} for SSBs, or T_{Evaluate_out_CSI-RS1} and subsequently T_{Evaluate_out_CSI-RS2} for CSI-RS, assuming two groups). Furthermore, the number of consecutive-out-of-sync indications 604 (n310) may be the same within each group 602 (e.g., the UE may determine the same number of out-of-sync indications 604 during each loop), or different within each group (e.g., the UE may determine a different number of out-of-sync indications during each loop). For example, the UE may determine a first number n of consecutive out-of-sync indications (n310[1] = n) and subsequently a second, different number m of consecutive out-of-sync indications (n310[2] = m), such as illustrated in the example of FIG. 6.

For instance, in the illustrated example, the network may configure out loop timer 608 to be 2, n310[1] for the first group as 6 (e.g., n = 6), n310[2] for the second group as 10 (e.g., m = 10), and n311 as 3. In such case, once the UE has received six (n310[1]) consecutive out-of-sync indications 604 in one group 602 and ten (n310[2]) consecutive out-of-sync indications 604 in another group 602 within a same out-of-sync evaluation period or different out-of-sync evaluation periods, then the UE may start RLM timer 606 (timer t310). The out-of-sync indications may all be determined here for a same cell 610 (e.g., a single SpCell such as a PCell or PSCell) or a same carrier 611 (e.g., a PCC). Afterwards, the UE may proceed to receive in-sync indications 612 while the RLM timer is counting as described above with respect to FIG. 4. If the UE subsequently receives three (n311), consecutive in-sync indications 612 within the in-sync evaluation period, the UE may stop RLM timer 606, and no RLF may be detected. On the other hand, the UE may detect that RLF has occurred if the UE does not receive the three (n311) consecutive in-sync indications before the RLM timer expires.

FIG. 7 illustrates an example 700 of a graph depicting multiple groups 702 of consecutive out-of-sync indications 704 which the UE may determine for different cells or carriers during RLM. While this example refers to the different cells as being part of a same cell group, the cells may alternatively be within different cell groups (for example, the cells may occupy different frequency ranges, such as one cell in FR1 and the other cell in FR2, or the cells may include different propagation delays). In this example, the UE may perform dual cell monitoring by performing n310 consecutive out-of-sync determinations respectively in two cells or carriers, and the UE may start RLM timer 706 in response to the multiple determinations. The number of groups 702 may correspond to the number of cells or carriers in which the UE may communicate with the base station, where each group 702 (n310) of consecutive out-of-sync indications 704 is determined for a different cell or carrier. Thus, the number of cells or carriers may indicate the number of groups 702 of consecutive out-of-sync indications 704 which the UE may determine before the UE may ultimately trigger the RLM timer 706. For example, if the UE is configured to communicate with the base station in two cells (e.g., an SpCell and a SCell) or in two carriers (e.g., a PCC and a SCC), the UE may initially determine one group of consecutive out-of-sync indications for the SpCell or PCC as described above with respect to FIGs. 4 and 5, then determine another group of consecutive out-of-sync indications for the Scell or SCC in a similar manner, and afterwards start RLM timer 706 in response to both determinations. In other examples, the UE may be configured to communicate with the base station in more than two cells (e.g., p cells including an SpCell and two SCells, where p = 3 in this example) or more than two carriers (e.g., q carriers including a PCC and two SCCs, where q = 3 in this example), and the UE may determine more than two groups of consecutive out-of-sync indications accordingly. Each group of consecutive out-of-sync indications may be determined within a same out-of-sync evaluation period or within a different out-of-sync evaluation period, similar to that described above with respect to FIG. 6. Furthermore, the number of consecutive-out-of-sync indications 704 (n310) may be the same within each group 702 (e.g., the UE determines the same number of out-of-sync indications 704 for each cell or carrier), or different within each group (e.g., the UE determines a different number of out-of-sync indications for each cell or carrier). For example, the UE may determine a first number n of consecutive out-of-sync indications (n310[1] = n) for one cell or carrier (e.g., cell 1 or carrier 1), and subsequently a second, different number m of consecutive out-of-sync indications (n310[2] = m) for another cell or carrier (e.g., cell p or carrier q), such as illustrated in the example of FIG. 7. Additionally, each cell or carrier may be associated with its own out loop timer (e.g., out loop timer 608), and the UE may determine multiple groups of consecutive out-of-sync indications within each different cell or carrier such as described above with respect to FIG. 6.

For instance, in the illustrated example, the network may configure multiple cells 708 for the UE (e.g., an SpCell and SCell) or carriers 709 for the UE (e.g., a PCC and a SCC), n310[1] for the first group as 6 (e.g., n = 6), n310[2] for the second group as 10 (e.g., m = 10), and n311 as 3. In such case, once the UE has received six (n310[1]) consecutive out-of-sync indications 704 in one group 702 for one of the cells 708 or carriers 709 and ten (n310[2]) consecutive out-of-sync indications 704 in another group 702 for the other one of the cells 708 or carriers 709 within a same out-of-sync evaluation period or different out-of-sync evaluation periods, then the UE may start RLM timer 706 (timer t310). Afterwards, the UE may proceed to receive in-sync indications 710 while the RLM timer is counting as described above with respect to FIG. 4. If the UE subsequently receives three (n311), consecutive in-sync indications 710 within the in-sync evaluation period, the UE may stop RLM timer 706, and no RLF may be detected. On the other hand, the UE may detect that RLF has occurred if the UE does not receive the three (n311) consecutive in-sync indications before the RLM timer expires.

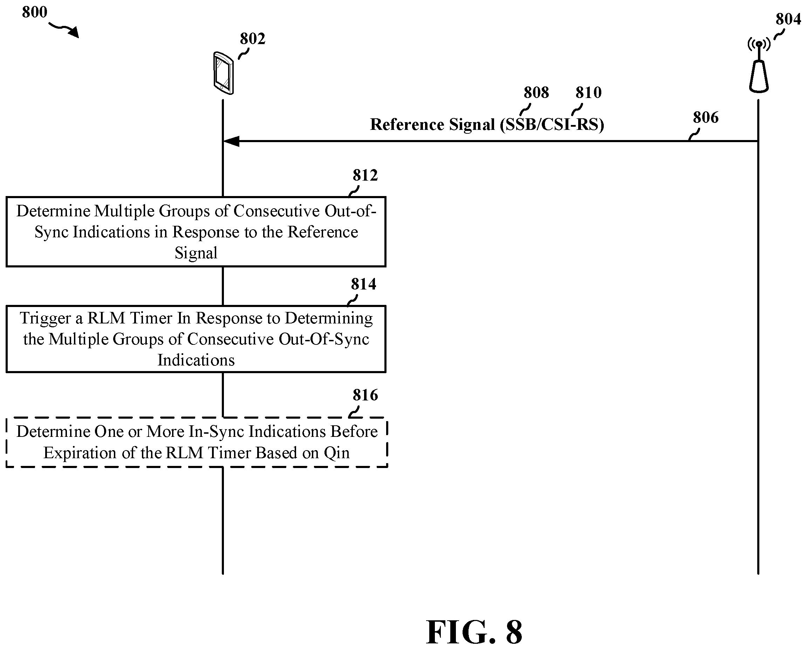

FIG. 8 is an example 800 of a call flow between a UE 802 and a base station 804. For instance, the base station may be a HAPS. Optional aspects are illustrated in dashed lines.

The UE 802 initially obtains a reference signal 806 from the base station 804. For example, referring to FIG. 3, RX processor 356 of the UE 350 may receive and demodulate data including the reference signal from one or more antennas 352 via receiver 354, and the controller/processor 359 of UE 350 may obtain the demodulated data from the RX processor 356 of the UE. The reference signal may be an SSB 808 or a CSI-RS 810.

At 812, the UE 802 determines multiple groups of consecutive out-of-sync indications in response to the reference signal. For example, referring to FIGs. 3-7, during out-of-sync evaluation period 404, the RX processor 356 may measure the BLER 402 of the received reference signal, and compare the measured BLER with the Qout threshold 406 (e.g., corresponding to BLERout = 10%). If the RX processor 356 identifies that the measured BLER exceeds the Qout threshold, the RX processor 356 may send an out-of-sync indication to the controller/processor 359 of the UE 350. The RX processor 356 may similarly identify multiple, consecutive out-of-sync indications 502, 604, 704 based on additional BLER measurements (e.g., n310 indications) during the out-of-sync evaluation period, and the RX processor 356 may send these out-of-sync indications to the controller/processor 359. These n310 consecutive, out-of-sync indications are part of one group 602, 702. Then, within the same out-of-sync evaluation period or in a different out-of-sync evaluation period, the RX processor 356 may identify another group 602, 702 of n310 consecutive out-of-sync indications similarly based on further BLER measurements. The RX processor may continue identifying groups 602, 702 of n310 consecutive out-of-sync indications (and sending them to controller/processor 359) until out loop timer 608 expires or has been incremented to reach a configured number of groups (e.g., if the groups are part of the same cell 610 or carrier 611), until a group of consecutive out-of-sync indications has been identified for each cell or carrier configured for the UE (e.g., if the groups are for different cells 708 or carriers 709), or until a combination of these conditions are met (e.g., each cell 708 or carrier 709 may be configured with a corresponding out loop timer 608). In this way, the controller/processor 359 may determine the multiple groups of these indications.

At 814, the UE 802 triggers a RLM timer in response to determining the multiple groups of consecutive out-of-sync indications. For example, referring to FIGs. 3-7, in response to controller/processor 359 of UE 350 determining multiple groups 602, 702 of consecutive-out-of-sync indications 502, 604, 704 as described above, the controller/processor 359 may trigger RLM timer 506, 606, 706 (t310) to begin counting. For instance, the RLM timer may be a counter designed in software, hardware, or a combination of software and hardware, and the controller/processor 359 may trigger the RLM timer by setting the counter to a zero value. Upon setting the counter to the zero value, the RLM timer may begin to increment (e.g., in response to a clock pulse in hardware or a similar mechanism in software) until a maximum configured value for the timer is reached (t310 timer expiry).

At 816, the UE 802 may determine one or more in-sync indications before expiration of the RLM timer based on a threshold (Qin) corresponding to an in-sync block error rate. For example, referring to FIGs. 3-7, during in-sync evaluation period 408, the RX processor 356 may measure the BLER 402 of the received reference signal, and compare the measured BLER with the Qin threshold 410 (e.g., corresponding to BLERin = 2%). If the RX processor 356 identifies that the measured BLER falls below the Qin threshold, the RX processor 356 may send an in-sync indication to the controller/processor 359 of the UE 350. The RX processor 356 may similarly identify multiple, consecutive in-sync indications 504, 612, 710 based on additional BLER measurements (e.g., n311 indications) during the in-sync evaluation period, and the RX processor 356 may send these in-sync indications to the controller/processor 359. Upon receipt of these n311 indications prior to expiry of RLM timer 506, 606, 706, the controller/processor 359 may stop the RLM timer, and no RLF may be detected. In this way, the controller/processor 359 may determine the in-sync indications prior to expiration of the RLM timer based on Qin.

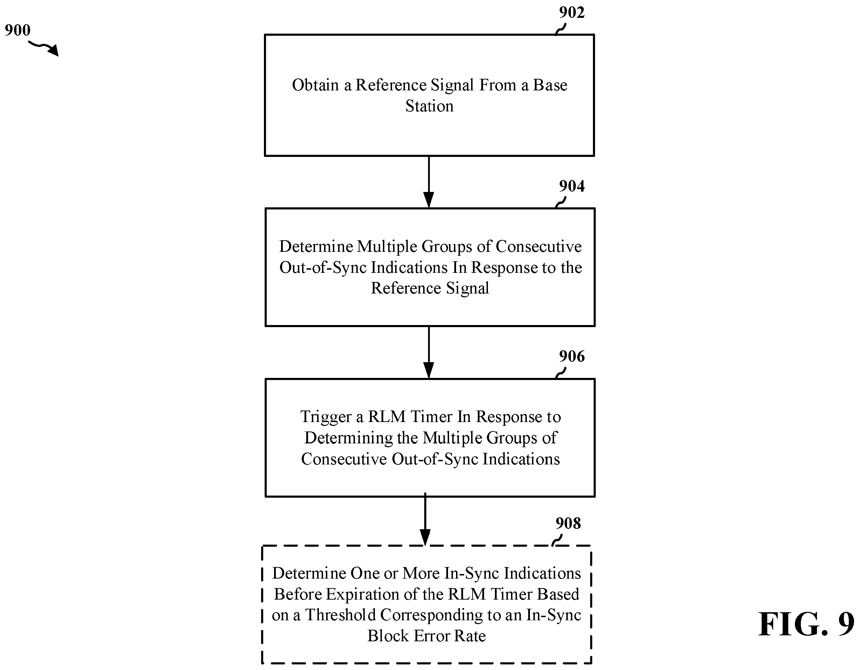

FIG. 9 is a flowchart 900 of a method of wireless communication. The method may be performed by a UE (e.g., the UE 104, 350, 802; the apparatus 1002). Optional aspects are illustrated in dashed lines. The method provides for improved RLM (e.g., in HAPS systems) by allowing a UE to apply a longer monitoring window for out-of-sync determinations before the UE triggers an RLM timer for in-sync determinations.

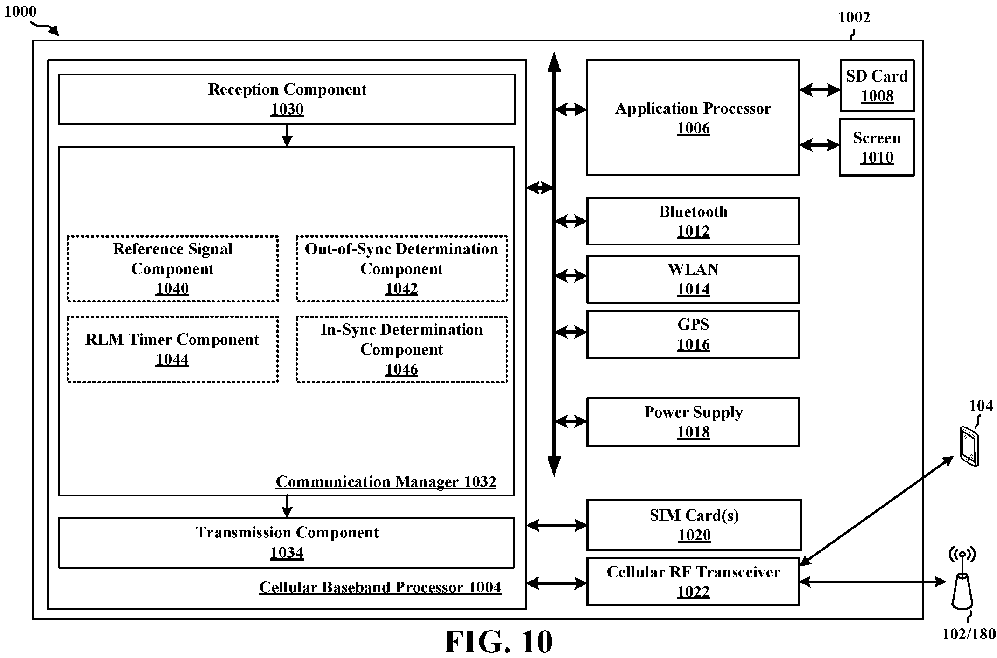

At 902, the UE obtains a reference signal from a base station. For example, 902 may be performed by reference signal component 1040 of FIG. 10. In one example, the reference signal is an SSB. In another example, the reference signal is a CSI-RS. For instance, as described above with respect to FIG. 8, the UE 802 may obtain reference signal 806 from base station 804. The reference signal may be an SSB 808 or a CSI-RS 810.

At 904, the UE determines multiple groups of consecutive out-of-sync indications in response to the reference signal. For example, 904 may be performed by out-of-sync determination component 1042 of FIG. 10. For instance, as described above with respect to FIG. 8, at 812, the UE 802 may determine multiple groups 602, 702 of consecutive out-of-sync indications 502, 604, 704 in response to reference signal 806. The consecutive out-of-sync indications may be determined based on a threshold (Qout) corresponding to an out-of-sync block error rate. For instance, as also described above with respect to FIG. 8 at 812, the UE 802 may determine the consecutive out-of-sync indications 502, 604, 704 based on Qout threshold 406 (corresponding to BLERout).

In one example, the multiple groups of consecutive out-of-sync indications may correspond to a same cell. For instance, as described above with respect to FIG. 6 and with respect to FIG. 8 at 812, the multiple groups 602 of consecutive out-of-sync indications 604 may correspond to same cell 610.

In one example, the multiple groups of consecutive out-of-sync indications may correspond to a same carrier. For instance, as described above with respect to FIG. 6 and with respect to FIG. 8 at 812, the multiple groups 602 of consecutive out-of-sync indications 604 may correspond to same carrier 611.

In one example, each of the multiple groups may include a different number of out-of-sync indications. For instance, as described above with respect to FIG. 6, the number of consecutive out-of-sync indications 604 (n310) may be different within each group 602. For example, the UE may determine a first number n of consecutive out-of-sync indications 604 (n310[1] = n) for one group 602, and subsequently a second, different number m of consecutive out-of-sync indications (n310[2] = m) for another group 602, such as illustrated in the example of FIG. 6. In another example, each of the multiple groups may include a same number of out-of-sync indications. For instance, as described above with respect to FIG. 6, the number of consecutive out-of-sync indications 604 (n310) may be the same within each group 602. For example, the UE may determine a same number, n, of consecutive out-of-sync indications 604 for each group (n310[1] = n310[2] = n).

In one example, each of the multiple groups of consecutive out-of-sync indications may correspond to a different cell. For instance, as described above with respect to FIG. 7 and with respect to FIG. 8 at 812, the multiple groups 702 of consecutive out-of-sync indications 704 may correspond to different cells 708.

In one example, each of the multiple groups of consecutive out-of-sync indications may correspond to a different carrier. For instance, as described above with respect to FIG. 7 and with respect to FIG. 8 at 812, the multiple groups 702 of consecutive out-of-sync indications 704 may correspond to different carriers 709.

In one example, the multiple groups may comprise more than two groups of consecutive out-of-sync indications, and each of the more than two groups may correspond to a different cell. In another example, the multiple groups may comprise more than two groups of consecutive out-of-sync indications, and each of the more than two groups may correspond to a different carrier. For instance, as described above with respect to FIG. 7, the UE may be configured to communicate with the base station in more than two cells (e.g., cells 1 - p, where p > 2) or carriers (e.g., carriers 1 - q, where q > 2), and each of the multiple groups 702 of consecutive out-of-sync indications 704 may correspond to one of these cells 1 - p or carriers 1 - q. Thus, the UE may determine more than two groups of consecutive out-of-sync indications in different cells or carriers accordingly (e.g., as described above with respect to FIG. 8 at 812).

At 906, the UE triggers a RLM timer in response to determining the multiple groups of consecutive out-of-sync indications. For example, 906 may be performed by RLM timer component 1044 of FIG. 10. For instance, as described above with respect to FIG. 8 at 814, the UE 802 may trigger RLM timer 506, 606, 706 in response to determining the multiple groups of consecutive out-of-sync indications at 812 and 904.

Finally, at 908, the UE may determine one or more in-sync indications before expiration of the RLM timer based on a threshold (Qin) corresponding to an in-sync block error rate. For example, 908 may be performed by in-sync determination component 1046 of FIG. 10. For instance, as described above with respect to FIG. 8 at 816, the UE 802 may determine one or multiple consecutive in-sync indications 504, 612, 710 before expiration of RLM timer 506, 606, 706 based on Qin threshold 410 (corresponding to BLERin).

FIG. 10 is a diagram 1000 illustrating an example of a hardware implementation for an apparatus 1002. The apparatus 1002 is a UE and includes a cellular baseband processor 1004 (also referred to as a modem) coupled to a cellular RF transceiver 1022 and one or more subscriber identity modules (SIM) cards 1020, an application processor 1006 coupled to a secure digital (SD) card 1008 and a screen 1010, a Bluetooth module 1012, a wireless local area network (WLAN) module 1014, a Global Positioning System (GPS) module 1016, and a power supply 1018. The cellular baseband processor 1004 communicates through the cellular RF transceiver 1022 with the UE 104 and/or BS 102/180. The cellular baseband processor 1004 may include a computer-readable medium / memory. The computer-readable medium / memory may be non-transitory. The cellular baseband processor 1004 is responsible for general processing, including the execution of software stored on the computer-readable medium / memory. The software, when executed by the cellular baseband processor 1004, causes the cellular baseband processor 1004 to perform the various functions described *supra.* The computer-readable medium / memory may also be used for storing data that is manipulated by the cellular baseband processor 1004 when executing software. The cellular baseband processor 1004 further includes a reception component 1030, a communication manager 1032, and a transmission component 1034. The communication manager 1032 includes the one or more illustrated components. The components within the communication manager 1032 may be stored in the computer-readable medium / memory and/or configured as hardware within the cellular baseband processor 1004. The cellular baseband processor 1004 may be a component of the UE 350 and may include the memory 360 and/or at least one of the TX processor 368, the RX processor 356, and the controller/processor 359. In one configuration, the apparatus 1002 may be a modem chip and include just the baseband processor 1004, and in another configuration, the apparatus 1002 may be the entire UE (e.g., see 350 of FIG. 3) and include the aforediscussed additional modules of the apparatus 1002.

The communication manager 1032 includes a reference signal component 1040 that is configured to obtain a reference signal from a base station, e.g., as described in connection with 902 of FIG. 9. The communication manager 1032 further includes an out-of-sync determination component 1042 that receives input in the form of the reference signal from the reference signal component 1040 and is configured to determine multiple groups of consecutive out-of-sync indications in response to the reference signal, e.g., as described in connection with 904 of FIG. 9 and 812 of FIG. 8. The communication manager 1032 further includes an RLM timer component 1044 that receives input in the form of the multiple groups of consecutive out-of-sync indications from the out-of-sync determination component 1042 and is configured to trigger an RLM timer in response to determining the multiple groups of consecutive out-of-sync indications, e.g., as described in connection with 906 of FIG. 9 and 814 of FIG. 8. The communication manager 1032 further includes an in-sync determination component 1046 that receives input in the form of the RLM timer from the RLM timer component 1044 and is configured to determine one or more in-sync indications before expiration of the RLM timer based on a threshold (Qin) corresponding to an in-sync block error rate, e.g., as described in connection with 908 of FIG. 9 and 816 of FIG. 8.

The apparatus may include additional components that perform each of the blocks of the algorithm in the aforementioned flowcharts of FIGs. 8 and 9. As such, each block in the aforementioned flowcharts of FIGs. 8 and 9 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1002, and in particular the cellular baseband processor 1004, includes means for obtaining a reference signal from a base station, means for determining multiple groups of consecutive out-of-sync indications in response to the reference signal, and means for triggering an RLM timer in response to determining the multiple groups of consecutive out-of-sync indications.

In one configuration, the reference signal may be an SSB.

In one configuration, the reference signal may be a CSI-RS.

In one configuration, the consecutive out-of-sync indications may be determined based on a threshold (Qout) corresponding to an out-of-sync block error rate.

In one configuration, the apparatus 1002, and in particular the cellular baseband processor 1004, may include means for determining one or more in-sync indications before expiration of the RLM timer based on a threshold (Qin) corresponding to an in-sync block error rate.

In one configuration, the multiple groups of consecutive out-of-sync indications may correspond to a same cell.

In one configuration, the multiple groups of consecutive out-of-sync indications may correspond to a same carrier.

In one configuration, each of the multiple groups may include a different number of out-of-sync indications.

In one configuration, each of the multiple groups may include a same number of out-of-sync indications.

In one configuration, each of the multiple groups of consecutive out-of-sync indications may correspond to a different cell.

In one configuration, each of the multiple groups of consecutive out-of-sync indications may correspond to a different carrier.

In one configuration, the multiple groups may comprise more than two groups of consecutive out-of-sync indications, and each of the more than two groups may correspond to a different cell.

In one configuration, the multiple groups may comprise more than two groups of consecutive out-of-sync indications, and each of the more than two groups may correspond to a different carrier.

The aforementioned means may be one or more of the aforementioned components of the apparatus 1002 configured to perform the functions recited by the aforementioned means. As described *supra*, the apparatus 1002 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

Accordingly, aspects of the present disclosure provide for improved RLM (e.g., in HAPS systems) by allowing a UE to apply a longer monitoring window for out-of-sync determinations before the UE triggers an RLM timer for in-sync determinations. For example, a UE configured to communicate with a base station in one cell or carrier may perform looped out-of-sync monitoring, thus extending the time to trigger the RLM timer. Additionally or alternatively, a UE configured to communicate with a base station in multiple cells or carriers may perform multi-cell or multi-carrier monitoring and triggers the RLM timer when all cells or carriers meet out-of-sync conditions, in this way also extending the time to trigger the RLM timer. As a result, the UE may perform additional out-of-sync monitoring during RLM before proceeding with in-sync monitoring, thus allowing the UE to account for rapid BLER changes (ping-pong effects) caused by tropospheric turbulence and enabling more accurate RLM determinations and minimal RLF detections.
It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.
The previous description is provided to enable any person skilled in the art to practice the various aspects described herein. Various modifications to these aspects will be readily apparent to those skilled in the art, and the generic principles defined herein may be applied to other aspects. The invention is solely defined by the independent claims. Dependent claims define preferred embodiments. Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method of wireless communication at a user equipment, UE (802), comprising:
obtaining (806, 902) a reference signal (808, 810) from a base station (804);
determining (812, 904) multiple groups of consecutive out-of-sync indications (502, 604, 704) in response to the reference signal, wherein:
each of the multiple groups of consecutive out-of-sync indications corresponds to a different cell, the multiple groups preferably comprising more than two groups of consecutive out-of-sync indications, or
each of the multiple groups of consecutive out-of-sync indications corresponds to a different carrier, the multiple groups preferably comprising more than two groups of consecutive out-of-sync indications, or
the multiple groups of consecutive out-of-sync indications correspond to a same carrier; and
triggering (814, 906) a radio link monitoring, RLM timer (506, 606, 706) in response to determining the multiple groups of consecutive out-of-sync indications.

2. The method of claim 1, wherein the reference signal is a synchronization signal block, SSB.

3. The method of claim 1, wherein the reference signal is a channel state information reference signal, CSI-RS.

4. The method of claim 1, wherein the consecutive out-of-sync indications are determined based on a threshold, Qout corresponding to an out-of-sync block error rate.

5. The method of claim 1, further comprising:
determining (816, 908) one or more in-sync indications (504, 710) before expiration of the RLM timer based on a threshold, Qin corresponding to an in-sync block error rate.

6. The method of claim 1, wherein each of the multiple groups includes a different number of out-of-sync indications.

7. The method of claim 1, wherein each of the multiple groups includes a same number of out-of-sync indications (502, 604, 704).

8. An apparatus for wireless communication, comprising:
means for obtaining a reference signal from a base station;
means for determining multiple groups of consecutive out-of-sync indications in response to the reference signal, wherein:
each of the multiple groups of consecutive out-of-sync indications corresponds to a different cell, the multiple groups preferably comprising more than two groups of consecutive out-of-sync indications, or
each of the multiple groups of consecutive out-of-sync indications corresponds to a different carrier, the multiple groups preferably comprising more than two groups of consecutive out-of-sync indications, or
the multiple groups of consecutive out-of-sync indications correspond to a same carrier; and
means for triggering a radio link monitoring, RLM timer in response to determining the multiple groups of consecutive out-of-sync indications.

9. A computer-readable medium storing computer executable code, the code when executed by a processor cause the processor to:
obtain a reference signal from a base station (804);
determine multiple groups of consecutive out-of-sync indications in response to the reference signal, wherein:
each of the multiple groups of consecutive out-of-sync indications corresponds to a different cell, the multiple groups preferably comprising more than two groups of consecutive out-of-sync indications, or
each of the multiple groups of consecutive out-of-sync indications corresponds to a different carrier, the multiple groups preferably comprising more than two groups of consecutive out-of-sync indications, or
the multiple groups of consecutive out-of-sync indications correspond to a same carrier; and
trigger a radio link monitoring, RLM timer in response to determining the multiple groups of consecutive out-of-sync indications.

## Patentansprüche

1. Ein Verfahren für eine drahtlose Kommunikation an einem Benutzergerät (User Equipment bzw. UE) (802), aufweisend:
Erhalten (806, 902) eines Referenzsignals (808, 810) von einer Basisstation (804),
Bestimmen (812, 904) von mehreren Gruppen von aufeinander folgenden Aus-der-Synchronisation- bzw. Synchronisationsverlustangaben (502, 604, 704) in Antwort auf das Referenzsignal, wobei:
jede der mehreren Gruppen von aufeinander folgenden Aus-der-Synchronisation-Angaben einer anderen Zelle entspricht, wobei die mehreren Gruppen vorzugsweise mehr als zwei Gruppen von aufeinander folgenden Aus-der-Synchronisation-Angaben umfassen, oder
jede der mehreren Gruppen von aufeinander folgenden Aus-der-Synchronisation-Angaben einem anderen Träger entspricht, wobei die mehreren Gruppen vorzugsweise mehr als zwei Gruppen von aufeinander folgenden Aus-der-Synchronisation-Angaben umfassen, oder
die mehreren Gruppen von aufeinander folgenden Aus-der-Synchronisation-Angaben einem gleichen Träger entsprechen, und
Auslösen (814, 906) eines Funkverbindung-Überwachung (Radio Link Monitoring bzw. RLM)-Timers (506, 606, 706) in Antwort auf das Bestimmen der mehreren Gruppen von aufeinander folgenden Aus-der-Synchronisation-Angaben.

2. Verfahren nach Anspruch 1, wobei das Referenzsignal ein Synchronisationssignalblock (SSB) ist.

3. Verfahren nach Anspruch 1, wobei das Referenzsignal ein Kanalzustandsinformationen-Referenzsignal (CSI-RS) ist.

4. Verfahren nach Anspruch 1, wobei die aufeinander folgenden Aus-der-Synchronisation-Angaben basierend auf einem Schwellenwert (Qout) in Entsprechung zu einer Aus-der-Synchronisation-Blockfehlerrate bestimmt werden.

5. Verfahren nach Anspruch 1, das weiterhin aufweist:
Bestimmen (816, 908) einer oder mehrerer In-Synchronisation-Angaben (504, 710) vor dem Ablaufen des RLM-Timers basierend auf einem Schwellenwert (Qin) in Entsprechung zu einer In-Synchronisation-Blockfehlerrate.

6. Verfahren nach Anspruch 1, wobei jede der mehreren Gruppen eine andere Anzahl von Aus-der-Synchronisation-Angaben umfasst.

7. Verfahren nach Anspruch 1, wobei jede der mehreren Gruppen eine gleiche Anzahl von Aus-der-Synchronisation-Angaben (502, 604, 704) umfasst.

8. Eine Vorrichtung für eine drahtlose Kommunikation, aufweisend:
Mittel zum Erhalten eines Referenzsignals von einer Basisstation,
Mittel zum Bestimmen von mehreren Gruppen von aufeinander folgenden Aus-der-Synchronisation-Angaben in Antwort auf das Referenzsignal, wobei:
jede der mehreren Gruppen von aufeinander folgenden Aus-der-Synchronisation-Angaben einer anderen Zelle entspricht, wobei die mehreren Gruppen vorzugsweise mehr als zwei Gruppen von aufeinander folgenden Aus-der-Synchronisation-Angaben umfassen, oder
jede der mehreren Gruppen von aufeinander folgenden Aus-der-Synchronisation-Angaben einem anderen Träger entspricht, wobei die mehreren Gruppen vorzugsweise mehr als zwei Gruppen von aufeinander folgenden Aus-der-Synchronisation-Angaben umfassen, oder
die mehreren Gruppen von aufeinander folgenden Aus-der-Synchronisation-Angaben einem gleichen Träger entsprechen, und
Mittel zum Auslösen eines Funkverbindung-Überwachung (Radio Link Monitoring bzw. RLM)-Timers in Antwort auf das Bestimmen der mehreren Gruppen von aufeinander folgenden Aus-der-Synchronisation-Angaben.

9. Ein computerlesbares Medium, das einen computerausführbaren Code speichert, wobei der Code bei einer Ausführung durch einen Prozessor den Prozessor veranlasst zum:
Erhalten eines Referenzsignals von einer Basisstation (804),
Bestimmen von mehreren Gruppen von aufeinander folgenden Aus-der-Synchronisation-Angaben in Antwort auf das Referenzsignal, wobei:
jede der mehreren Gruppen von aufeinander folgenden Aus-der-Synchronisation-Angaben einer anderen Zelle entspricht, wobei die mehreren Gruppen vorzugsweise mehr als zwei Gruppen von aufeinander folgenden Aus-der-Synchronisation-Angaben umfassen, oder
jede der mehreren Gruppen von aufeinander folgenden Aus-der-Synchronisation-Angaben einem anderen Träger entspricht, wobei die mehreren Gruppen vorzugsweise mehr als zwei Gruppen von aufeinander folgenden Aus-der-Synchronisation-Angaben umfassen, oder
die mehreren Gruppen von aufeinander folgenden Aus-der-Synchronisation-Angaben einem gleichen Träger entsprechen, und
Auslösen eines Funkverbindung-Überwachung (Radio Link Monitoring bzw. RLM)-Timers in Antwort auf das Bestimmen der mehreren Gruppen von aufeinander folgenden Aus-der-Synchronisation-Angaben.

## Revendications

1. Procédé de communication sans fil au niveau d'un équipement d'utilisateur, UE (802), comprenant :
l'obtention (806, 902) d'un signal de référence (808, 810) à partir d'une station de base (804) ;
la détermination (812, 904) de multiples groupes d'indications consécutives de non-synchronisation (502, 604, 704) en réponse au signal de référence, dans lequel :
chacun des multiples groupes d'indications de non-synchronisation consécutives correspond à une cellule différente, les multiples groupes comprenant de préférence plus de deux groupes d'indications de non-synchronisation consécutives, ou
chacun des multiples groupes d'indications consécutives de non-synchronisation correspond à une porteuse différente, les multiples groupes comprenant de préférence plus de deux groupes d'indications consécutives de non synchronisation, ou
les multiples groupes d'indications consécutives de non-synchronisation correspondent à une même porteuse ; et
le déclenchement (814, 906) d'un temporisateur de surveillance de liaison radio, RLM (506, 606, 706) en réponse à la détermination des multiples groupes d'indications consécutives de non synchronisation.

2. Le procédé de la revendication 1, dans lequel le signal de référence est un bloc de signal de synchronisation, SSB.

3. Le procédé de la revendication 1, dans lequel le signal de référence est un signal de référence d'information d'état de canal, CSI-RS.

4. Le procédé de la revendication 1, dans lequel les indications consécutives de non-synchronisation sont déterminées sur la base d'un seuil, Qout, correspondant à un taux d'erreur de bloc non synchronisé.

5. Le procédé selon la revendication 1, comprenant en outre :
la détermination (816, 908) d'une ou plusieurs indication(s) de synchronisation (504, 710) avant l'expiration du temporisateur RLM sur la base d'un seuil, Qin correspondant à un taux d'erreur de bloc de synchronisation.

6. Le procédé de la revendication 1, dans lequel chacun des multiples groupes comprend un nombre différent d'indications de non-synchronisation.

7. Le procédé de la revendication 1, dans lequel chacun des multiples groupes comprend un même nombre d'indications de non-synchronisation (502, 604, 704).

8. Un appareil de communication sans fil, comprenant :
des moyens pour obtenir un signal de référence à partir d'une station de base ;
des moyens pour déterminer de multiples groupes d'indications consécutives d'erreur de synchronisation en réponse au signal de référence, dans lequel :
chacun des multiples groupes d'indications consécutives de non-synchronisation correspond à une cellule différente, les multiples groupes comprenant de préférence plus de deux groupes d'indications consécutives de non synchronisation, ou
chacun des multiples groupes d'indications consécutives de non-synchronisation correspond à une porteuse différente, les multiples groupes comprenant de préférence plus de deux groupes d'indications consécutives de non synchronisation, ou
les multiples groupes d'indications consécutives de non-synchronisation correspondent à une même porteuse ; et
des moyens pour déclencher un temporisateur de surveillance de liaison radio, RLM en réponse à la détermination des multiples groupes d'indications consécutives de non synchronisation.

9. Un support lisible par ordinateur stockant un code exécutable par ordinateur, le code lorsqu'il est exécuté par un processeur amène le processeur à :
obtenir un signal de référence d'une station de base (804) ;
déterminer plusieurs groupes d'indications consécutives de non-synchronisation en réponse au signal de référence, dans lequel :
chacun des multiples groupes d'indications consécutives de non-synchronisation correspond à une cellule différente, les multiples groupes comprenant de préférence plus de deux groupes d'indications consécutives de non synchronisation, ou
chacun des multiples groupes d'indications consécutives de non-synchronisation correspond à une porteuse différente, les multiples groupes comprenant de préférence plus de deux groupes d'indications consécutives de non synchronisation, ou
les multiples groupes d'indications de non-synchronisation consécutives correspondent à une même porteuse ; et
déclencher un temporisateur de surveillance de liaison radio, RLM en réponse à la détermination des multiples groupes d'indications consécutives de non-synchronisation.
